# EUROPÄISCHE PATENTANMELDUNG

(11) **EP 1 988 626 A1**
(43) Veröffentlichungstag der Anmeldung: **05.11.2008**
(21) Anmeldenummer: 07009073.3
(22) Anmeldetag: 04.05.2007
(51) Int. Cl.: H02P 1/28, H02P 1/46

(54) **Überlastschutzschaltung**

(71) Anmelder: SIEMENS AKTIENGESELLSCHAFT, 80333 München (DE)
(72) Erfinder: Reichenbach, Norbert, 92224 Amberg (DE); Seitz, Johann, 92224 Amberg (DE)

(57) **Zusammenfassung**

Eine Überlastschutzschaltung (2) eines Sanftanlaufgerätes umfasst
- eine Spannungsmessvorrichtung (3), welche zur Messung des Spannungsabfalls über ein zu einer Wicklung (7) eines Elektromotors (1) führendes Leiterstück (11) ausgebildet ist,
- eine an die Spannungsmessvorrichtung (3) angeschlossene Schwellwertauswerteeinheit (4),
- eine an die Schwellwertauswerteeinheit (4) angeschlossenen Steuereinheit (5), sowie
- eine an die Steuereinheit (5) angeschlossene Schaltvorrichtung (6), welche zur Unterbrechung des Stromflusses zur Wicklung (7) zur Verhinderung einer Überlastung des Sanftanlaufgerätes ausgebildet ist.

## Beschreibung

Die Erfindung betrifft eine Überlastschutzschaltung eines Sanftanlaufgerätes sowie ein Verfahren zum Schutz eines Sanftanlaufgerätes vor Überlastung.

Eine insbesondere zur Schnellerkennung von Blockierungszuständen vorgesehene Motorschutzschaltung ist beispielsweise aus der DE 38 09 436 C2 bekannt. Diese Motorschutzschaltung berücksichtigt unter anderem einen Anlaufstrom-Sollwert und einen Motorstrom-Referenzwert und soll mit Hilfe von drei Vergleichern und einem Logikblock Fehleinstellungen von Nennstromwerten automatisch verhindern. Auch eine Anlaufzeit des Motors wird berücksichtigt. Insgesamt weist die aus der DE 38 09 436 C2 bekannte Vorrichtung einen hohen Grad an Komplexität auf.

Wird bei einem Sanftanlaufgerät auf eine Strommessung im Zusammenhang mit dem Schutz gegen Überlastung verzichtet, so sind dagegen die stromführenden Komponenten des Sanftanlaufgerätes in Relation zum Motornennstrom weit überdimensioniert auszulegen. Der konstruktive Vorteil, welcher durch den Entfall der Strommessung erreicht wird, wird somit durch einen Mehraufwand hinsichtlich der Dimensionierung von Bauteilen wieder egalisiert.

Der Erfindung liegt die Aufgabe zugrunde, ein Sanftanlaufgerät zuverlässig und auf besonders einfache Weise vor Überlastung zu sichern, wobei eine Überdimensionierung von Bauteilen des Sanftanlaufgerätes vermeidbar ist.

Diese Aufgabe wird erfindungsgemäß gelöst durch eine Überlastschutzschaltung eines Sanftanlaufgerätes mit den Merkmalen des Anspruchs 1 sowie durch ein eine Überlastung des Sanftanlaufgerätes verhinderndes Verfahren mit den Merkmalen des Anspruchs 10. Im Folgenden im Zusammenhang mit der Überlastschutzschaltung erläuterte Vorteile und Ausgestaltungen gelten sinngemäß auch für das Verfahren und umgekehrt.

Die für ein Sanftanlaufgerät, insbesondere für den Betrieb eines Drehstromasynchronmotors, vorgesehene Überlastschutzschaltung umfasst eine Spannungsmessvorrichtung, welche zur Messung des Spannungsabfalls über ein zu einer Wicklung des Elektromotors führendes Leiterstück ausgebildet ist. Wesentlich hierbei ist, dass es sich um ein Leiterstück handelt, welches ohnehin vorhanden ist, um Strom zur Motorwicklung zu leiten. An die Spannungsmessvorrichtung, welche vorzugsweise einen Verstärker umfasst, ist eine Schwellwertauswerteeinheit angeschlossen. Die Schwellwertauswertung ist logisch, in bevorzugter Weise über eine galvanische Trennung, mit einer Steuereinheit verknüpft. An diese wiederum ist eine Schaltvorrichtung angeschlossen, welche zur Unterbrechung des Stromflusses zur Wicklung im Fall einer drohenden Überlastung von Komponenten des Sanftanlaufgerätes ausgebildet ist.

In vorteilhafter Ausgestaltung weist das Sanftanlaufgerät eine mit der Steuereinheit verknüpfte Anlaufstrombegrenzung auf. Diese umfasst zusätzlich zu Leistungshalbleitern, insbesondere Thyristoren, welche eine Phasenanschnittsteuerung ermöglichen, vorzugsweise auch Bypassleitungen für den stationären Betrieb des Motors. In besonders bevorzugter Weise ist die Anlaufstrombegrenzung zur Unterbrechung des Stromflusses im Überlastungsfall ausgebildet und erfüllt damit eine Doppelfunktion, nämlich einerseits die Strombegrenzung beim Starten des Motors und andererseits die Abschaltung des Motors im Überlastungsfall.

In den Vergleich des am Leiterstück gemessenen Spannungsabfalls mit dem Schwellwert geht vorzugsweise auch die Dauer der Schwellwertüberschreitung ein. Eine Begrenzung oder Abschaltung des Stromflusses zur Wicklung des Elektromotors erfolgt demnach nur dann, wenn die Dauer der Schwellwertüberschreitung eine vorgegebene Mindestdauer von beispielsweise 10 ms oder 20 ms übersteigt, wobei diese Zeitspanne vom Grad der Überschreitung des Schwellwerts abhängig sein kann. Die zeitliche Bewertung der Schwellwertüberschreitung ist zum Beispiel mit einem RC-Glied als Tiefpass realisierbar.

Aufgrund des kurzen Zeitraums vom Auftreten des unzulässig hohen Stroms bis zum Abschalten des Elektromotors können Leistungshalbleiter, die zur Ansteuerung des Motors, insbesondere in einem Sanftanlaufgerät, verwendet werden, vergleichsweise schwach ausgelegt werden. Während bei herkömmlichen Motorsteuerungen Leistungshalbleiter beispielsweise auf den achtfachen Gerätenennstrom für eine Dauer von sechs bis acht Sekunden - bis zum Ansprechen eines externen Überlastschutzorgans, beispielsweise eines Leistungsschalters oder eines Überlastrelais - ausgelegt werden müssen, ist es nach der Erfindung ausreichend, wenn die Leistungshalbleiter einschließlich der Kühleinrichtung mindestens 200 ms mit dem achtfachen Gerätenennstrom belastbar sind. Entsprechendes gilt gegebenenfalls für ein ebenfalls nur begrenzt belastbares Bypasssystem, über welches den Motorwicklungen nach der Anlaufphase Strom zugeführt wird.

Ein Ansprechen der Überlastschutzschaltung ist beispielsweise beim vierfachen oder sechsfachen Gerätenennstrom vorgesehen. Die Erfassung des Spannungsabfalls über dem zu einer Wicklung des Elektromotors führenden Leiterstück ist nicht als exakte Messung zu verstehen. Da bei blockierendem Motor in jedem Fall ein sehr starker Stromanstieg festzustellen ist, kommt es auf besondere Messgenauigkeit in keiner Weise an. Es ist daher auch nicht erforderlich, den exakten Querschnitt und Widerstand des zur Messung des Spannungsabfalls verwendeten Leiterstücks zu kennen. Entscheidend ist, dass der Schwellwert, dessen Überschreitung überwacht wird, einerseits hoch genug gesetzt ist, um Fehlauslösungen der Überlastschutzschaltung im bestimmungsgemäßen Betrieb des Elektromotors zu vermeiden und andererseits auf einen Wert festgelegt ist, der ein zuverlässiges Auslösen der Überlastschutzschaltung im Fall einer Überlastung sicherstellt. Nach einer vorteilhaften Weiterbildung ist die Höhe des Schwellwerts einstellbar.

Der Vorteil der Erfindung liegt insbesondere darin, dass zur Detektion eines unzulässig hohen, insbesondere bei blockiertem Elektromotor auftretenden, Stromes lediglich der Spannungsabfall über ein Leiterstück erfasst wird, welches in jedem Fall erforderlich ist, um einer Motorwicklung Strom zuzuführen. Der apparative Aufwand ist damit äußerst gering. So sind beispielsweise keine Shuntwiderstände oder herkömmlichen Stromwandler zur Realisierung der Erfindung notwendig. Bei dem Leiterstück, an welchem der vom Belastungszustand des Motors abhängige Spannungsabfall gemessen wird, handelt es sich, abhängig insbesondere von der Größe und konstruktiven Gestaltung des Elektromotors, beispielsweise um eine Stromschiene oder eine auf einem Schaltungsträger angeordnete Leiterbahn.

Die Erfindung ist sowohl bei rotativen elektrischen Antrieben als auch bei elektrischen Linearantrieben anwendbar.

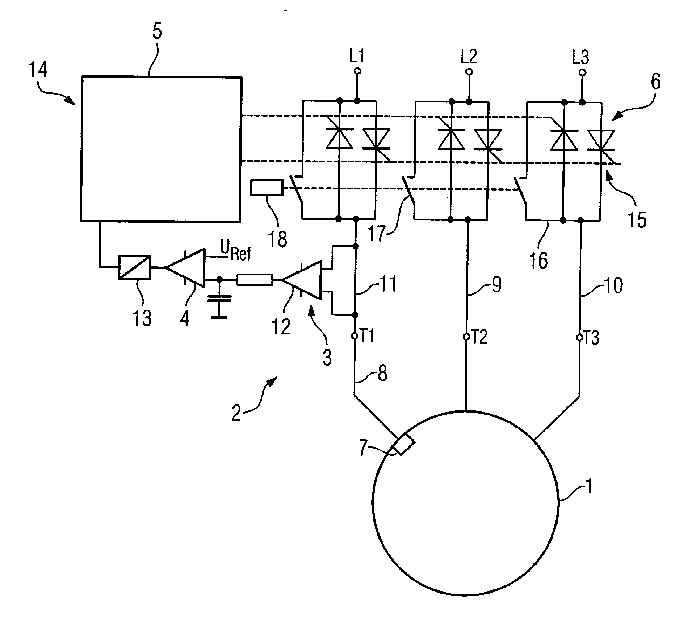

Im Folgenden wird ein Ausführungsbeispiel der Erfindung anhand einer Zeichnung näher erläutert. Hierin zeigt die einzige Figur schematisch einen Elektromotor 1, nämlich einen dreiphasigen Drehstrommotor, mit einer Überlastschutzschaltung 2.

Die Überlastschutzschaltung 2 umfasst eine Spannungsmessvorrichtung 3, eine Schwellwertauswerteeinheit 4, eine Steuereinheit 5 sowie eine Schaltvorrichtung 6. Die Steuereinheit 5 und die Schaltvorrichtung 6 bilden zugleich Komponenten eines Sanftanlaufgeräts, welches eine Überlastung in der Anlaufphase des Elektromotors 1 verhindert.

Den Wicklungen 7 des Elektromotors 1, von welchen nur eine einzige symbolisiert dargestellt ist, wird über Leitungen 8,9,10 und Klemmen T1,T2,T3 Strom zugeführt. Innerhalb der in der Figur links angeordneten Leitung 8 befindet sich ein Leiterstück 11, welches ein Teil der Spannungsmessvorrichtung 3 bildet. Im Vergleich zu den Leitungen 9,10, welche nicht an eine Spannungsmessvorrichtung angeschlossen sind, weist die Leitung 8 keine Änderung auf. Die Spannungsmessung erfolgt also unter Nutzung eines stromführenden Teils, nämlich des Leiterstücks 11, welches zum Betrieb des Elektromotors 1 ohnehin benötigt wird. Dieses Leiterstück 11 ist zum Zweck der Messung in keiner Weise präpariert, etwa auf eine bestimmte Impedanz oder einen bestimmten Widerstand eingestellt. Je nach Leistung des Elektromotors 1 handelt es sich beim Leiterstück 11 um einen Abschnitt einer Leiterbahn auf einer Leiterplatte, um ein definiertes Stück einer Leitung oder um einen Abschnitt einer Stromschiene. In der Figur ist das Leiterstück 11 durch Fettdruck hervorgehoben dargestellt; dies bedeutet jedoch nicht, dass der Querschnitt des Leiterstücks 11 vom Querschnitt der an das Leiterstück 11 anschließenden Abschnitte der Leitung 8 abweicht.

An die Endpunkte des Leiterstücks 11, dessen Widerstand nur näherungsweise, zum Beispiel mit einer Ungenauigkeit von ± 20% bis ± 30% bekannt zu sein braucht, ist ein Verstärker 12 angeschlossen. Der zu messende Spannungsabfall liegt typischerweise in der Größenordnung einiger zehn Millivolt. Der Verstärker 12 ist angeschlossen an die Schwellwertauswerteeinheit 4 oder integraler Bestandteil dieser Einheit, die mit einer stabilisierten Spannung, der Referenzspannung URef, betrieben wird. Ergebnis der Schwellwertauswertung ist ein digitales 1-bit Signal, das heißt ein Null/Eins Signal, welches angibt, ob eine Überschreitung des fest vorgegebenen oder einstellbaren Grenzwerts, betreffend den Spannungsabfall am Leiterstück 11, gegeben ist. Der Grenzwert beträgt in vorteilhafter Ausgestaltung etwa das vier- bis fünffache des im störungsfreien Dauerbetrieb des Elektromotors 1 auftretenden Wertes.

Die Schwellwertauswerteeinheit 4 ist über ein Bauteil, welches eine galvanische Trennung realisiert, vorzugsweise einen Optokoppler 13, an die Steuereinheit 5 angeschlossen. Da lediglich eine Ja/Nein-Information zu übertragen ist, ist für die galvanische Trennung eine robuste, rationell herstellbare Komponente, welche keine besonderen Anforderungen an die Auflösung erfüllen muss, prädestiniert. Im Gegensatz zum Verstärker 12 und zur Schwellwertauswerteeinheit 4, welche auf dem Lastspannungspotential des Elektromotors 1, typischerweise im Bereich von ca. 400 V bis 600 V, arbeiten, wird die an den Optokoppler 13 angeschlossene Steuereinheit 5 im Niederspannungsbereich betrieben. Die Steuereinheit 5 fungiert zusammen mit der an die Außenleiter L1,L2,L3 angeschlossenen Schaltvorrichtung 6 unter anderem als Sanftanlaufgerät, auch als Anlaufstrombegrenzung 14 bezeichnet.

Die Anlaufstrombegrenzung 14 umfasst eine Thyristorschaltung 15, welche eine Phasenanschnittsteuerung beim Starten des Elektromotors 1 ermöglicht. Zusätzliche, die Thyristorschaltung 15 umgehende Bypassleitungen 16 stellen eine direkte Verbindung zwischen den Außenleitern L1,L2,L3 und den Klemmen T1,T2,T3 des Elektromotors 1 her. Die Bypassleitungen 16 werden nach dem Anlaufvorgang, das heißt sobald die Strombegrenzung mittels der Thyristorschaltung 15 nicht mehr benötigt wird, mit Hilfe von Schaltern 17, die durch einen Aktuator 18 betätigbar sind, geschlossen. Der Aktuator 18 ist als Teil der Schaltvorrichtung 6 ebenso wie die Thyristorschaltung 15 an die Steuereinheit 5 angeschlossen.

Zusätzlich zu Ihren Funktionen beim Starten des Elektromotors 1 hat die Steuereinheit 5 eine zentrale Funktion als Komponente der Überlastschutzschaltung 2. Sobald die Steuereinheit 5 über den Optokoppler 13 ein 1-Signal, gleichbedeutend mit einer detektierten Überlastung des Elektromotors 1, insbesondere wegen Blockierung des Rotors, empfängt, wird dieselbe Schaltvorrichtung 6, welche zur Begrenzung des Anlaufstroms verwendet wird, genutzt, um den Stromfluss durch die Leitungen 8,9,10 zu unterbrechen oder zumindest drastisch zu reduzieren und damit eine Überlastung des Sanftanlaufgeräts einschließlich der Schaltvorrichtung 6 zu verhindern. Von besonderem Vorteil ist dabei die Tatsache, dass die Überlastschutzschaltung 2 um ein Mehrfaches schneller anspricht als herkömmliche, zum Schutz elektrischer Geräte vor Überlastung verwendete Schaltgeräte. Hierbei kann, da an dem Leiterstück 11 keine Veränderungen im Vergleich zu Motoren ohne Schutzschaltung erforderlich sind, auf bewährte Motorkonstruktionen zurückgegriffen werden. Zur Erhöhung der Detektionssicherheit können, abweichend vom Ausführungsbeispiel nach der Figur, an mehreren oder allen Leitungen 8,9,10 Spannungsmessvorrichtungen 3 angeschlossen sein. Da bei mechanischer Blockierung des Elektromotors 1 jedoch ein rapider Stromanstieg in jeder Leitung 8,9,10 zu erwarten ist, ist für diesen Anwendungsfall eine einzige, an ein bauartbedingt zwangsläufig im Elektromotor 1 vorhandenes Leiterstück 11 angeschlossene Spannungsmessvorrichtung 3 für die zuverlässige Erfüllung der Schutzfunktion ausreichend.

## Patentansprüche

1. Überlastschutzschaltung (2) eines Sanftanlaufgerätes, mit
- einer Spannungsmessvorrichtung (3), welche zur Messung des Spannungsabfalls über ein zu einer Wicklung (7) eines Elektromotors (1) führendes Leiterstück (11) ausgebildet ist,
- einer an die Spannungsmessvorrichtung (3) angeschlossenen Schwellwertauswerteeinheit (4),
- einer an die Schwellwertauswerteeinheit (4) angeschlossenen Steuereinheit (5),
- einer an die Steuereinheit (5) angeschlossenen Schaltvorrichtung (6), welche zur Unterbrechung des Stromflusses zur Wicklung (7) zur Verhinderung einer Überlastung des Sanftanlaufgerätes ausgebildet ist.

2. Überlastschutzschaltung (2) nach Anspruch 1, **dadurch gekennzeichnet, dass** als Elektromotor (1) ein Drehstromasynchronmotor vorgesehen ist.

3. Überlastschutzschaltung (2) nach Anspruch 1 oder 2, **dadurch gekennzeichnet, dass** die Steuereinheit (5) mit einer Anlaufstrombegrenzung (14) verknüpft ist.

4. Überlastschutzschaltung (2) nach Anspruch 3, **dadurch gekennzeichnet, dass** die Anlaufstrombegrenzung (14) Bypassleitungen (16) aufweist.

5. Überlastschutzschaltung (2) nach Anspruch 3 oder 4, **dadurch gekennzeichnet, dass** die Anlaufstrombegrenzung (14) zugleich zur Unterbrechung des Stromflusses zur Wicklung (7) im Überlastungsfall ausgebildet ist.

6. Überlastschutzschaltung (2) nach einem der Ansprüche 1 bis 5, **dadurch gekennzeichnet, dass** die Spannungsmessvorrichtung (3) einen Verstärker (12) umfasst.

7. Überlastschutzschaltung (2) nach einem der Ansprüche 1 bis 6, **dadurch gekennzeichnet, dass** die Schwellwertauswerteeinheit (4) von der Steuereinheit (5) galvanisch getrennt ist.

8. Überlastschutzschaltung (2) nach einem der Ansprüche 1 bis 7, **dadurch gekennzeichnet, dass** das Leiterstück (11) als Stromschiene ausgebildet ist.

9. Überlastschutzschaltung (2) nach einem der Ansprüche 1 bis 7, **dadurch gekennzeichnet, dass** das Leiterstück (11) als Leiterbahn ausgebildet ist.

10. Verfahren zum Schutz eines Sanftanlaufgerätes vor Überlastung, mit folgenden Schritten:
- an einem zu einer Wicklung (7) eines Elektromotors (1) führenden Leiterstück (11) wird der Spannungsabfall gemessen,
- der gemessene Spannungsabfall wird automatisch mit einem Schwellwert verglichen,
- im Fall einer Überschreitung des Schwellwerts durch den gemessenen Spannungsabfall wird der Stromfluss zur Wicklung (7) automatisch zumindest begrenzt.

11. Verfahren nach Anspruch 10, **dadurch gekennzeichnet, dass** die Dauer der Schwellwertüberschreitung automatisch ausgewertet wird.

12. Verfahren nach Anspruch 11, **dadurch gekennzeichnet, dass** eine Begrenzung oder Abschaltung des Stromflusses zur Wicklung (7) nur erfolgt, wenn die Dauer der Schwellwertüberschreitung eine vorgegebene Mindestdauer übersteigt.
